# EUROPEAN PATENT SPECIFICATION

(11) **EP 3 693 608 B1**
(45) Date of publication and mention of the grant of the patent: **22.05.2024**
(21) Application number: 20154284.2
(22) Date of filing: 29.01.2020
(51) Int. Cl.: F04D 17/12, F04D 29/02, F04D 29/44, F04D 29/68

(54) **METHOD OF MANUFACTURING CENTRIFUGAL ROTARY MACHINE AND CENTRIFUGAL ROTARY MACHINE**
VERFAHREN ZUR HERSTELLUNG EINER ZENTRIFUGALDREHMASCHINE UND ZENTRIFUGALDREHMASCHINE
PROCÉDÉ DE FABRICATION D'UNE MACHINE ROTATIVE CENTRIFUGE ET MACHINE ROTATIVE CENTRIFUGE

(30) Priority: 05.02.2019 JP 2019018760
(43) Date of publication of application: 12.08.2020
(73) Proprietor: Mitsubishi Heavy Industries Compressor Corporation, Tokyo 108-0014 (JP)
(72) Inventor: MASUTANI, Jo, Tokyo, 100-8332 (JP); YAMASHITA, Shuichi, Tokyo, 100-8332 (JP)
(74) Representative: Studio Torta S.p.A.

(56) References cited:
- DE-A1-102014 203 251
- JP-A- H09 203 394
- JP-A- S54 105 307
- JP-A- 2013 194 558
- US-A1- 2010 272 561
- US-A1- 2012 288 365
- US-A1- 2015 354 599

## Description

### BACKGROUND OF THE INVENTION

### Field of the Invention

The present invention relates to a method of manufacturing a centrifugal rotary machine and a centrifugal rotary machine.

### Description of Related Art

A centrifugal compressor includes a rotation shaft which extends along an axis, a plurality of impellers which are attached to the rotation shaft, and a casing which covers the rotation shaft and the impeller from the outer peripheral side. A flow path which is repeatedly increased and decreased in diameter from one side to the other side in the axial direction is formed inside the casing. The flow path includes a diffuser flow path which extends from an exit of the impeller outward in the radial direction, a return bend portion which is turned by 180° from an outer radial end portion of the diffuser flow path and extends inward in the radial direction, and a guide flow path which extends from the return bend portion inward in the radial direction. A plurality of return vanes are provided inside the guide flow path so as to straighten the flow of the fluid. As a detailed example of such a return vane, one described in Utility Model Registration No. 3187468 is known.

The return vane described in Utility Model Registration No. 3187468 is curved from the circumferential direction toward the radial direction as it goes forward in the rotation direction of the impeller (the rotation shaft). Further, an S2 of the return vane (an angle of the inner radial end surface formed with respect to the radial direction) is set to 0°. Accordingly, the flow of the fluid contacting the return vane from the outside in the radial direction is straightened and a swirling flow component included in the flow is removed. As a result, the head of the compressor is improved.

JP 2013 194558 A, JP S54 105307 A and US 2010/272561 A1 disclose prior art centrifugal rotary machines.

### SUMMARY OF THE INVENTION

When the exit angle of the return vane is set to 0° as in Utility Model Registration No. 3187468, it is known that an operation range of the compressor decreases although the head is raised. Prior to using the centrifugal compressor in the field, there is also a requirement to retroactively enlarge this operation range. Thus, it is desired to develop a technique capable of easily and retroactively enlarging the operation range of the centrifugal compressor.

The present invention has been made in view of the above-described circumstances and an object of the present invention is to provide a method of manufacturing a centrifugal rotary machine capable of easily and retroactively enlarging an operation range and a centrifugal rotary machine having an enlarged operation range.

### [Solution to Problem]

An aspect of the present invention is a method of manufacturing a centrifugal rotary machine as defined in claim 1.

According to this method, the cut surface is formed by cutting a portion including the inner radial end portion of the return vane from the positive pressure surface to the negative pressure surface by the cutting step. Accordingly, an exit angle of the return vane is set to be larger than an exit angle of the virtual airfoil. When the exit angle increases, a swirling flow component remains in the flow of the fluid having passed through the return vane. As a result, it is possible to enlarge the operation range of the centrifugal rotary machine. Further, in the above-described method, a cutting step is retroactively performed on the return vane attached to the casing through the fixing step. Accordingly, it is possible to obtain a centrifugal rotary machine having a desired operation range without manufacturing the return vane again.

In the method of manufacturing the centrifugal rotary machine, in the cutting step, the cut surface may be formed in a linear shape when viewed from the axial direction.

According to the above-described method, since the cut surface is formed in a linear shape, the exit angle of the return vane can be changed. That is, it is possible to adjust the operation range of the centrifugal rotary machine only by relatively simple machining.

In the method of manufacturing the centrifugal rotary machine, in the cutting step, the cut surface may be formed in an arc shape so as to be recessed forward in the rotation direction when viewed from the axial direction.

According to the above-described method, since the cut surface is formed in an arc shape, the flow of the fluid flowing along the cut surface is smoothly guided. Accordingly, it is possible to reduce the possibility of separation or vortex in the flow.

In the method of manufacturing the centrifugal rotary machine, in the cutting step, the cut surface may be formed so as to form an exit angle of 10° or more with respect to the radial direction.

According to the above-described method, the cut surface forms an angle of 10° or more with respect to the radial direction. In other words, the exit angle forms an angle of 10° or more. Accordingly, it is possible to more actively cause a swirling flow component included in the flow of the fluid guided by the return vane to remain. As a result, it is possible to remarkably expand the operation range of the centrifugal rotary machine.

In the method of manufacturing the centrifugal rotary machine, in the cutting step, the cut surface may be formed so that a separation distance between the pair of return vanes adjacent to each other in the rotation direction is the smallest between the negative pressure surface of one return vane and an outer radial end portion of the cut surface of the other return vane.

Accordingly, it is possible to more smoothly guide the flow of the fluid flowing between the return vanes.

The method of manufacturing the centrifugal rotary machine may further include: a connection curved surface forming step of forming a connection curved surface connecting the positive pressure surface and the cut surface in a curved surface shape after the cutting step.

According to the above-described method, since the positive pressure surface and the cut surface are connected in a curved surface shape by the connection curved surface, it is possible to reduce the possibility of separation or vortex in the flow of the fluid flowing along the connection curved surface.

A centrifugal rotary machine according to an aspect of the present invention is a centrifugal rotary machine as defined in claim 7.

According to this configuration, the cut surface is formed by cutting a portion including the inner radial end portion of the return vane from the positive pressure surface to the negative pressure surface. Accordingly, an exit angle of the return vane is set to be larger than an exit angle of the virtual airfoil. As the exit angle increases, a swirling flow component remains in the flow of the fluid having passed through the return vane. As a result, it is possible to enlarge the operation range of the centrifugal rotary machine.

In the centrifugal rotary machine, the cut surface may be formed in a linear shape when viewed from the axial direction.

According to the above-described configuration, since the cut surface is formed in a linear shape, the exit angle of the return vane can be changed. That is, it is possible to adjust the operation range of the centrifugal rotary machine only by relatively simple machining.

In the centrifugal rotary machine, the cut surface may be formed in an arc shape so as to be recessed forward in the rotation direction when viewed from the axial direction.

According to the above-described configuration, since the cut surface is formed in an arc shape, the flow of the fluid flowing along the cut surface is smoothly guided. Accordingly, it is possible to reduce the possibility of separation or vortex in the flow.

In the centrifugal rotary machine, the cut surface may form an angle of 10° or more with respect to the radial direction.

According to the above-described configuration, the cut surface forms an angle of 10° or more with respect to the radial direction. In other words, the exit angle forms an angle of 10° or more. Accordingly, it is possible to more actively cause a swirling flow component included in the flow of the fluid guided by the return vane to remain. As a result, it is possible to remarkably expand the operation range of the centrifugal rotary machine.

In the centrifugal rotary machine, a separation distance between the pair of return vanes adjacent to each other in the rotation direction may be the smallest between the negative pressure surface of one return vane and an outer radial end portion of the cut surface of the other return vane.

Accordingly, it is possible to more smoothly guide the flow of the fluid flowing between the return vanes.

The centrifugal rotary machine may further include: a connection curved surface which connects together the positive pressure surface and the cut surface in a curved surface shape.

According to the above-described configuration, since the positive pressure surface and the cut surface are connected in a curved surface shape by the connection curved surface, it is possible to reduce the possibility of separation or vortex in the flow of the fluid flowing along the connection curved surface.

According to the present invention, it is possible to provide a method of manufacturing a centrifugal rotary machine capable of easily and retroactively expanding an operation range and a centrifugal rotary machine having an expanded operation range.

### BRIEF DESCRIPTION OF THE DRAWINGS

FIG. 1 is a schematic diagram showing a configuration of a centrifugal rotary machine according to an embodiment of the present invention.
FIG. 2 is a cross-sectional view of the centrifugal rotary machine according to the embodiment of the present invention.
FIG. 3 is a diagram showing a configuration of a return vane according to the embodiment of the present invention.
FIG. 4 is a main enlarged view of the return vane according to the embodiment of the present invention.
FIG. 5 is a process diagram showing a method of manufacturing a centrifugal rotary machine according to the embodiment of the present invention.
FIG. 6 is a diagram showing a modified example of the return vane according to the embodiment of the present invention.

### DETAILED DESCRIPTION OF THE INVENTION

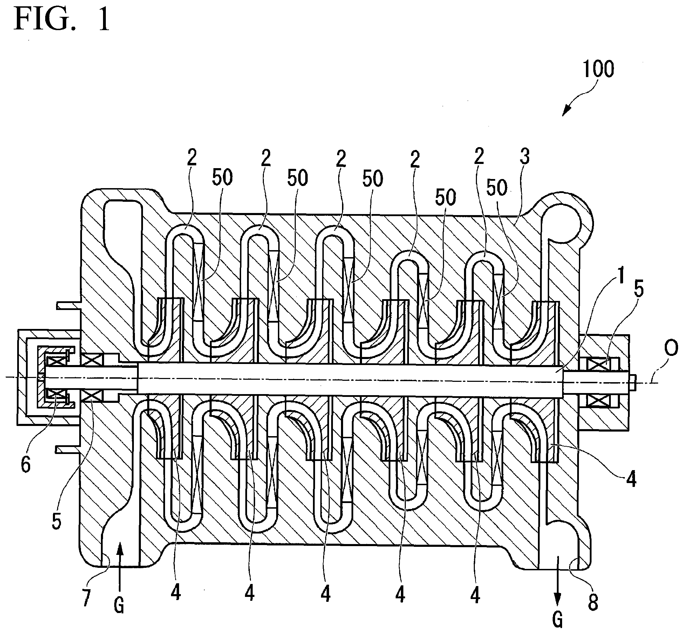

As shown in FIG. 1, a centrifugal compressor 100 includes a rotation shaft 1 which rotates around an axis, a casing 3 which forms a flow path 2 by covering the periphery of the rotation shaft 1, a plurality of impellers 4 which are provided in the rotation shaft 1, and a return vane 50 which is provided inside the casing 3.

The casing 3 is formed in a cylindrical shape which extends along an axis O. The rotation shaft 1 extends inside the casing 3 so as to penetrate along the axis O. Both end portions of the casing 3 in the direction of the axis O are respectively provided with a journal bearing 5 and a thrust bearing 6. The rotation shaft 1 is supported by the journal bearing 5 and the thrust bearing 6 so as to be rotatable around the axis O.

An intake port 7 which takes in air as a working fluid G from the outside is provided at one side of the casing 3 in the direction of the axis O. Further, an exhaust port 8 through which the working fluid G compressed inside the casing 3 is discharged is provided at the other side of the casing 3 in the direction of the axis O.

An inner space which allows the intake port 7 and the exhaust port 8 to communicate with each other and is repeatedly increased and decreased in diameter is formed inside the casing 3. This inner space accommodates a plurality of the impellers 4 and forms a part of the flow path 2. Additionally, in the following description, a location side of the intake port 7 on the flow path 2 will be referred to as an upstream side and a location side of the exhaust port 8 will be referred to as a downstream side.

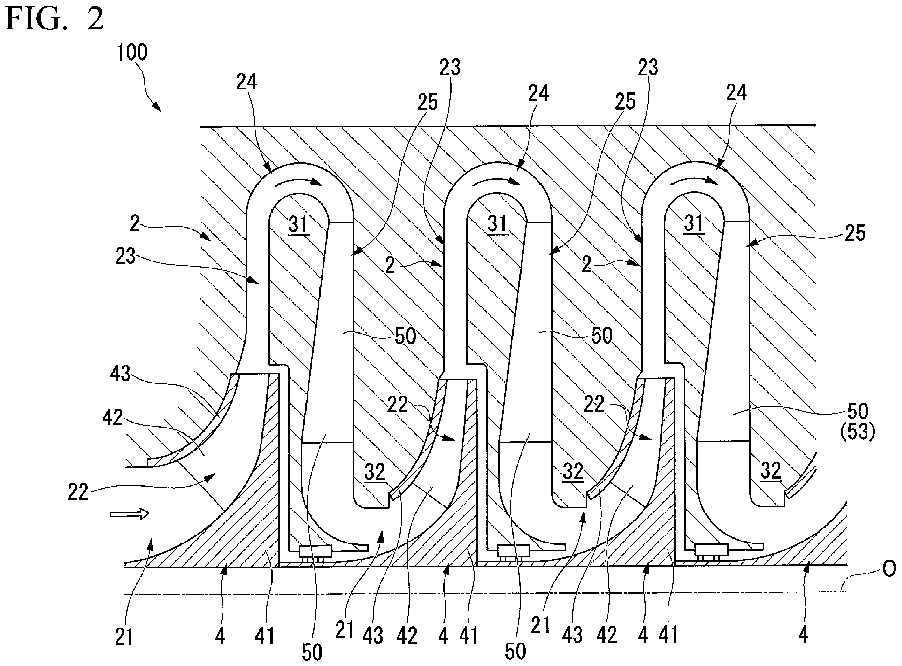

A plurality of (six) impellers 4 are provided on the outer peripheral surface of the rotation shaft 1 at intervals in the direction of the axis O. Each impeller 4 includes, as shown in FIG. 2, a disk 41 which has a substantially circular cross-section when viewed from the direction of the axis O, a plurality of blades 42 which are provided on the upstream surface of the disk 41, and a cover 43 which covers the plurality of blades 42 from the upstream side.

The disk 41 is formed so that the radial dimension gradually increases as it goes from one side to the other side in the direction of the axis O when viewed from a direction intersecting the axis O, whereby the disk is formed in a substantially conical shape.

The plurality of blades 42 are radially arranged outward in the radial direction about the axis O on the conical surface facing the upstream side in both surfaces of the disk 41 in the direction of the axis O. More specifically, these blades are formed by thin plates erected from the upstream surface of the disk 41 toward the upstream side. These blades 42 are curved from one side toward the other side in the circumferential direction when viewed from the direction of the axis O.

The upstream edge of the blade 42 is provided with the cover 43. In other words, the plurality of blades 42 are sandwiched by the cover 43 and the disk 41 from the direction of the axis O. Accordingly, a space is formed among the cover 43, the disk 41, and a pair of adjacent blades 42. This space forms a part (a compression flow path 22) of the flow path 2 to be described later.

The flow path 2 is a space which allows the impeller 4 with the above-described configuration to communicate with the inner space of the casing 3. In this embodiment, a description will be made such that each impeller 4 (each compression stage) is provided with one flow path 2. That is, in the centrifugal compressor 100, five flow paths 2 which are continuous from the upstream side toward the downstream side are formed so as to correspond to five impellers 4 except for the last impeller 4.

Each flow path 2 includes an intake flow path 21, a compression flow path 22, a diffuser flow path 23, and a guide flow path 25. Additionally, FIG. 2 mainly shows the first to third impellers 4 in the flow paths 2 and the impellers 4.

In the first impeller 4, the intake flow path 21 is directly connected to the intake port 7. External air is taken into each flow path on the flow path 2 as the working fluid G by the intake flow path 21. More specifically, the intake flow path 21 is gradually curved from the direction of the axis O toward the outside in the radial direction as it goes from the upstream side toward the downstream side.

The intake flow path 21 of the second and subsequent impellers 4 communicates with the downstream end of the guide flow path 25 (to be described later) in the front (first) flow path 2. That is, the flow direction of the working fluid G having passed through the guide flow path 25 is changed so as to face the downstream side along the axis O as described above.

The compression flow path 22 is a flow path which is surrounded by the upstream surface of the disk 41, the downstream surface of the cover 43, and the pair of adjacent blades 42 in the circumferential direction. More specifically, the cross-sectional area of the compression flow path 22 gradually decreases from the inside toward the outside in the radial direction. Accordingly, the working fluid G flowing in the compression flow path 22 while the impeller 4 rotates is gradually compressed to become a high-pressure fluid.

The diffuser flow path 23 is a flow path which extends from the inside toward the outside in the radial direction of the axis O. The inner end portion of the diffuser flow path 23 in the radial direction communicates with the outer end portion of the compression flow path 22 in the radial direction.

The guide flow path is a flow path which turns the working fluid G going outward in the radial direction toward the inside in the radial direction so that the working fluid flows into the next impeller 4. The guide flow path is formed by a return bend portion 24 and a guide flow path 25.

The return bend portion 24 reverses the flow direction of the working fluid G flowing from the inside toward the outside in the radial direction through the diffuser flow path 23 toward the inside in the radial direction. One end side (upstream side) of the return bend portion 24 communicates with the diffuser flow path 23 and the other end side (downstream side) thereof communicates with the guide flow path 25. In the middle of the return bend portion 24, a portion located on the outermost side in the radial direction is a top portion. In the vicinity of the top portion, the inner wall surface of the return bend portion 24 is formed as a three-dimensional curved surface, so that the flow of the working fluid G is not disturbed.

The guide flow path 25 extends from the downstream end portion of the return bend portion 24 toward the inside in the radial direction. The outer end portion of the guide flow path 25 in the radial direction communicates with the return bend portion 24. The inner end portion of the guide flow path 25 in the radial direction communicates with the intake flow path 21 of the rear flow path 2 as described above.

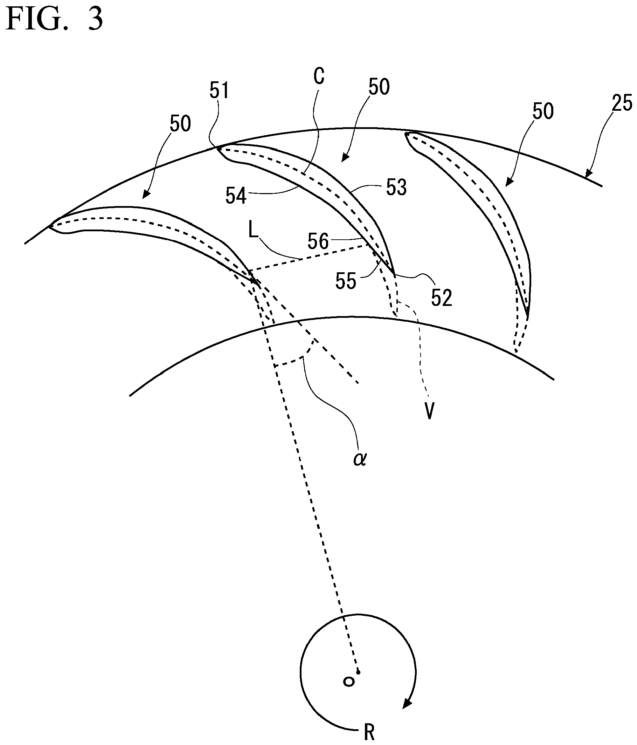

Next, the return vane 50 will be described. A plurality of the return vanes 50 are provided inside the guide flow path 25. Specifically, as shown in FIG. 3, the plurality of return vanes 50 are radially arranged around the axis O in the guide flow path 25. In other words, these return vanes 50 are arranged at intervals in the circumferential direction around the axis O. Both ends of the return vane 50 in the axial direction are connected to the casing 3 forming the guide flow path 25.

The return vane 50 has a wing shape in which an outer radial end portion is a leading edge 51 and an inner radial end portion is a trailing edge 52 when viewed from the direction of the axis O. The return vane 50 is curved toward the front side in the rotation direction R of the rotation shaft 1 as it goes from the leading edge 51 toward the trailing edge 52 (that is, from the outside toward the inside in the radial direction). The return vane 50 is curved so as to protrude toward the front side in the rotation direction R. A surface facing the front side of the return vane 50 in the rotation direction R is formed as a negative pressure surface 53 and a surface facing the rear side in the rotation direction R is formed as a pressure surface 54. When viewed from the direction of the axis O, a line having the same distance from the pressure surface 54 and the negative pressure surface 53 is a center line C.

In this embodiment, an exit angle α of the return vane 50 is inclined toward the front side in the rotation direction R. The exit angle α is the same between the return vanes 50 of the same stage. The exit angle α is desirably 10° or more and 45° or less. As shown in figure 3, the exit angle α is an acute angle formed by a center line C of the return vane 50 with respect to a reference line S passing through an inner radial end portion 52 of the cut surface 55 of the return vane 50 and the axis O when viewed from a direction of the axis, the center line C having a same distance from the positive pressure surface 54 and the negative pressure surface 53 of the return vane 50 when viewed from the direction of the axis.

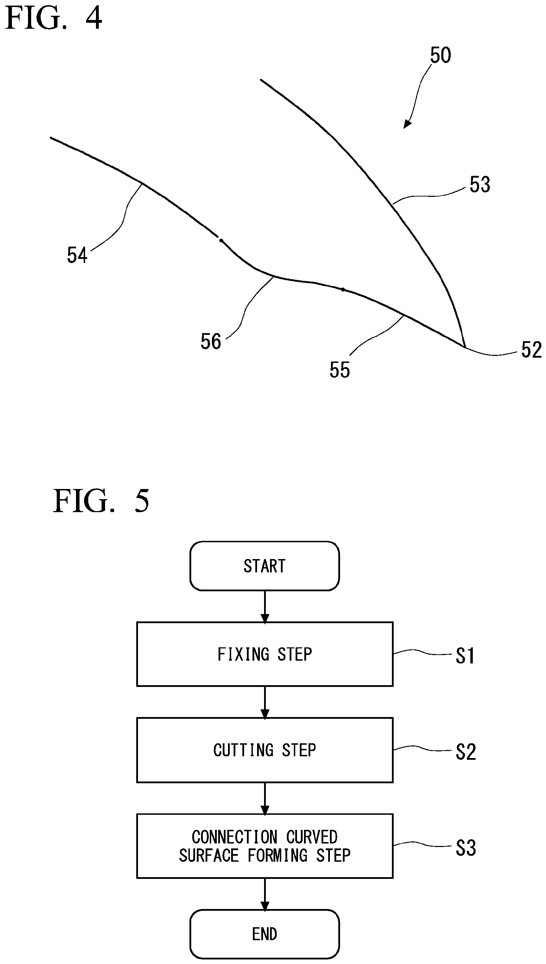

Further, as shown enlarged in FIG. 4, an end surface on the side of the pressure surface 54 including the trailing edge 52 of the return vane 50 is formed as a cut surface 55. This cut surface 55 is formed by cutting a portion including an inner radial end portion of a virtual airfoil V shown in FIG. 3 from the pressure surface 54 to the negative pressure surface 53. On the assumption that the pressure surface 54 and the negative pressure surface 53 extend at a uniform curvature, the virtual airfoil V mentioned herein means an airfoil that extends to an intersection point between the inner radial end portions of the pressure surface 54 and the negative pressure surface 53. The return vane 50 according to the embodiment is formed by cutting a portion including the inner radial end portion of the virtual airfoil V by machining. The cut surface 55 is curved in an arc shape so as to protrude toward the front side in the rotation direction R.

As shown in FIG. 4, the pressure surface 54 and the cut surface 55 are connected to each other by a smooth curved surface (a connection curved surface 56). The pressure surface 54 and the cut surface 55 are curved so as to protrude toward the front side in the rotation direction R and are curved in the connection curved surface 56 so as to protrude toward the rear side in the rotation direction R. That is, the connection curved surface 56 is curved in a direction opposite to the pressure surface 54 and the cut surface 55. The connection curved surface 56 is formed by chamfering a corner portion formed between the pressure surface 54 and the cut surface 55.

Further, as shown in FIG. 3, a separation distance L between a pair of the return vanes 50 adjacent to each other in the rotation direction is the smallest between the negative pressure surface 53 of one return vane and an outer radial end portion of the cut surface of the other return vane 50.

Subsequently, a method of manufacturing the centrifugal rotary machine according to the embodiment will be described with reference to FIG. 5. As shown in the same drawing, this manufacturing method includes a fixing step S 1, a cutting step S2, and a connection curved surface forming step S3.

In the fixing step S 1, a return vane 50 (return vane body) which will be processed and has the virtual airfoil V is fixed onto the guide flow path 25. Although not shown in detail, the return vane body is fixed to a wall surface of the guide flow path 25 by a bolt.

After the fixing step S1, the cutting step S2 is performed. In the cutting step S2, the cut surface 55 is formed by performing machining (cutting) on the return vane body fixed onto the guide flow path 25. Additionally, it is desirable to perform a checking step of checking whether an operation range reaches a predetermined desired operation range by a trial operation of the centrifugal compressor 100 if necessary between the fixing step S 1 and the cutting step S2. When the desired operation range is not satisfied (that is, when the operation range needs to be enlarged), the cutting step S2 is performed. Further, in the cutting step S2, it is desirable to adjust the cutting amount so that the exit angle α of the processed return vane 50 is within the numerical range and the operation range becomes a desired value.

After the cutting step S2, the connection curved surface forming step S3 is performed. In the connection curved surface forming step S3, the connection curved surface 56 is formed. More specifically, the connection curved surface 56 having a curved surface shape is formed by chamfering a corner portion formed between the pressure surface 54 and the cut surface 55. As described above, all steps of the manufacturing method according to the embodiment are completed.

According to the above-described method, the cut surface 55 is formed by cutting a portion including the inner radial end portion of the return vane body from the pressure surface 54 to the negative pressure surface 53 by the cutting step S2. Accordingly, the exit angle α of the return vane 50 is set to be larger than the exit angle of the virtual airfoil V. As the exit angle α increases, a swirling flow component remains in the flow of the fluid that has passed through the return vane 50. As a result, the operation range of the centrifugal compressor 100 can be enlarged. Further, in the above-described method, the cutting step S2 is retroactively performed on the return vane body attached to the casing 3 in advance through the fixing step S1. Accordingly, it is possible to easily obtain the centrifugal compressor 100 having a desired operation range without manufacturing the return vane 50 again.

According to the above-described method and configuration, when the cut surface 55 is formed in an arc shape so as to protrude toward the front side in the rotation direction R, the flow of the fluid flowing along the cut surface 55 is smoothly guided. Accordingly, it is possible to reduce the possibility of separation or vortex in the flow.

According to the above-described method and configuration, the cut surface 55 forms an angle of 10° or more with respect to the radial direction. In other words, the exit angle α forms an angle of 10° or more. Accordingly, it is possible to more actively cause a swirling flow component included in the flow of the fluid guided by the return vane 50 to remain. As a result, it is possible to remarkably enlarge the operation range of the centrifugal compressor 100.

According to the above-described method and configuration, the separation distance between the return vanes 50 is the smallest between the outer radial end portions of the negative pressure surface 53 of one return vane 50 and the cut surface 55 of the other return vane 50. Accordingly, it is possible to more smoothly guide the flow of the fluid flowing between the return vanes 50.

According to the above-described method and configuration, since the pressure surface 54 and the cut surface 55 are connected to each other in a curved surface shape by the connection curved surface 56, it is possible to reduce the possibility of separation or vortex in the flow of the fluid flowing along the connection curved surface 56.

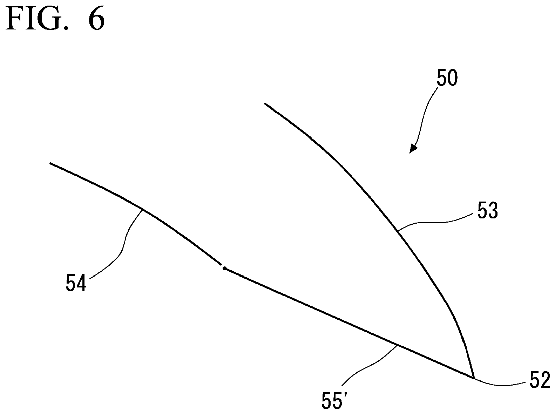

As described above, the embodiment of the present invention has been described. Additionally, the above-described method and configuration can be modified and improved in various forms without departing from the scope of the present invention as defined solely by the appended claims. For example, in the above-described embodiment, an example in which the cut surface 55 is formed in an arc shape has been described. However, the shape of the cut surface 55 is not limited thereto and as shown in FIG. 6, the cut surface 55' may be formed in a linear shape when viewed from the direction of the axis O. Further, a configuration without the connection curved surface 56 may be used. When the cut surface 55' is formed in a linear shape, the operation range of the centrifugal compressor 100 can be easily adjusted only by relatively simple machining.

### [Reference Signs List]

1 Rotation shaft
2 Flow path
3 Casing
4 Impeller
5 Journal bearing
6 Thrust bearing
7 Intake port
8 Exhaust port
21 Intake flow path
22 Compression flow path
23 Diffuser flow path
24 Return bend portion
25 Guide flow path
41 Disk
42 Blade
43 Cover
50 Return vane
51 Leading edge
52 Trailing edge
53 Negative pressure surface
54 Pressure surface
55 Cut surface
56 Connection curved surface
100 Centrifugal compressor
C Center line
L Separation distance
O Axis
R Rotation direction
V Virtual airfoil
G Working fluid
α Exit angle
S1 Fixing step
S2 Cutting step
S3 Connection curved surface forming step

## Claims

1. A method of manufacturing a centrifugal rotary machine, wherein the centrifugal rotary machine includes a rotation shaft (1) rotatable around an axis (O), a plurality of impellers (4) fixed to the rotation shaft (1), a casing (3) provided with a diffuser flow path (23) covering the impeller (4) from an outside and extending from an outer peripheral side of the impeller outward in a radial direction, a return bend portion (24) turning from an outer radial end portion of the diffuser flow path (23) inward in the radial direction, and a guide flow path (25) extending from the return bend portion inward in the radial direction, and a plurality of return vanes (50) provided on the guide flow path (25) at intervals in a rotation direction of the rotation shaft (1), the method comprising:
a fixing step (S1) of fixing a return vane body (50) onto the guide flow path (25), wherein the return vane body (50) includes a positive pressure surface (54) recessed forward in the rotation direction, a negative pressure surface (53) protruding forward in the rotation direction and a virtual airfoil (V) curved forward in the rotation direction as it goes inward in the radial direction and formed by a virtual positive pressure surface (54) formed by the positive pressure surface extending inward in the radial direction at a uniform curvature and a virtual negative pressure surface (53) formed by the negative pressure surface extending inward in the radial direction at a uniform curvature and wherein the virtual airfoil (V) extends to an intersection point between an inner radial end portion of the virtual positive pressure surface and an inner radial end portion of the virtual negative pressure surface; and
a cutting step (S2) of, performed after the fixing step (S1), cutting a portion including an inner radial end portion of the virtual airfoil from the positive pressure surface to the negative pressure surface so as to form a cut surface (55),
wherein in the cutting step, the cut surface (55) is formed such that an exit angle (α) of the return vane is larger than an exit angle of the virtual airfoil (V),
wherein the exit angle of the return vane (50) is an acute angle formed by a center line of the return vane (50) with respect to a reference line passing through a trailing edge (52) of the cut surface (55) of the return vane (50) and the axis (O) when viewed from a direction of the axis, the center line having a same distance from the positive pressure surface (54) and the negative pressure surface (53) of the return vane (50) when viewed from the direction of the axis (O), and
the exit angle of the virtual airfoil (V) is an acute angle formed by a center line of the virtual airfoil (V) with respect to a reference line passing through the intersection point between the inner radial end portion of the virtual positive pressure surface and the inner radial end portion of the virtual negative pressure surface of the virtual airfoil (V) and the axis (O) when viewed from the direction of the axis, the center line having a same distance from the virtual positive pressure surface and the virtual negative pressure surface of the virtual airfoil (V) when viewed from the direction of the axis (O).

2. The method of manufacturing the centrifugal rotary machine according to claim 1,
wherein in the cutting step, the cut surface (55) is formed in a linear shape when viewed from an axial direction.

3. The method of manufacturing the centrifugal rotary machine according to claim 1,
wherein in the cutting step, the cut surface (55) is formed in an arc shape so as to be recessed forward in the rotation direction when viewed from an axial direction (O).

4. The method of manufacturing the centrifugal rotary machine according to any one of claims 1 to 3,
wherein in the cutting step, the cut surface (55) is formed such that the exit angle (α) of the return vane is 10° or more.

5. The method of manufacturing the centrifugal rotary machine according to any one of claims 1 to 4,
wherein in the cutting step, the cut surface (55) is formed so that a separation distance (L) between a pair of the return vanes (50) adjacent to each other in the rotation direction is the smallest between the negative pressure surface (53) of one return vane and an outer radial end portion of the cut surface of the other return vane.

6. The method of manufacturing the centrifugal rotary machine according to any one of claims 1 to 5, further comprising:
a connection curved surface (56) forming step of forming a connection curved surface (56) connecting the positive pressure surface (54) and the cut surface (55) in a curved surface shape after the cutting step.

7. A centrifugal rotary machine manufactured by the method of any of claims 1 to 6 comprising:
a rotation shaft (1) which is rotatable around an axis;
a plurality of impellers (4) which are fixed to the rotation shaft (1);
a casing (3) which is provided with a diffuser flow path (23) covering the impeller (4) from an outside and extending from an outer peripheral side of the impeller outward in a radial direction, a return bend portion (24) turning from an outer radial end portion of the diffuser flow path (23) inward in a radial direction, and a guide flow path (25) extending from the return bend portion (24) inward in a radial direction; and
a plurality of return vanes (50) which are provided on the guide flow path at intervals in the rotation direction of the rotation shaft (1),
wherein the return vane includes a positive pressure surface (54) recessed forward in the rotation direction, a negative pressure surface (53) protruding forward in the rotation direction, and a cut surface (55) that is an end surface including a trailing edge (52) of the return vane,
wherein, regarding a return vane body including the positive pressure surface, the negative pressure surface and a virtual airfoil (V) that is curved forward in the rotation direction as it goes inward in the radial direction and formed by a virtual positive pressure surface (54) formed by the positive pressure surface extending inward in the radial direction at a uniform curvature and a virtual negative pressure surface formed by the negative pressure surface (53) extending inward in the radial direction at a uniform curvature, the cut surface (55) of the return vane is formed by cutting a portion including an inner radial end portion of the virtual airfoil (V) of the return vane body from the positive pressure surface (54) to the negative pressure surface, the virtual airfoil (V) extending to an intersection point between an inner radial end portion of the virtual positive pressure surface and an inner radial end portion of the virtual negative pressure surface,
wherein an exit angle (α) of the return vane is larger than an exit angle of the virtual airfoil (V),
wherein the exit angle of the return vane (50) is an acute angle formed by a center line of the return vane (50) with respect to a reference line passing through the trailing edge (52) of the cut surface (55) of the return vane (50) and the axis (O) when viewed from a direction of the axis, the center line having a same distance from the positive pressure surface (54) and the negative pressure surface (53) of the return vane (50) when viewed from the direction of the axis (O), and
wherein the exit angle of the virtual airfoil (V) is an acute angle formed by a center line of the virtual airfoil (V) with respect to a reference line passing through the intersection point between the inner radial end portion of the virtual positive pressure surface and the inner radial end portion of the virtual negative pressure surface of the virtual airfoil (V) and the axis (O) when viewed from the direction of the axis, the center line having a same distance from the virtual positive pressure surface and the virtual negative pressure surface of the virtual airfoil (V) when viewed from the direction of the axis (O).

8. The centrifugal rotary machine according to claim 7, wherein the cut surface (55) is formed in a linear shape when viewed from an axial direction.

9. The centrifugal rotary machine according to claim 7, wherein the cut surface (55) is formed in an arc shape so as to be recessed forward in the rotation direction when viewed from an axial direction.

10. The centrifugal rotary machine according to any one of claims 7 to 9, wherein the cut surface (55) is formed such that the exit angle (α) of the return vane is 10° or more.

11. The centrifugal rotary machine according to any one of claims 7 to 10, wherein a separation distance (L) between a pair of the return vanes (50) adjacent to each other in the rotation direction is the smallest between the negative pressure surface (53) of one return vane and an outer radial end portion of the cut surface of the other return vane (50).

12. The centrifugal rotary machine according to any one of claims 7 to 11, further comprising a connection curved (56) surface which connects together the positive pressure surface (54) and the cut surface (55) in a curved surface shape.

## Patentansprüche

1. Verfahren zum Fertigen einer Zentrifugaldrehmaschine, wobei die Zentrifugaldrehmaschine eine Drehwelle (1), die um eine Achse (O) drehbar ist eine Mehrzahl von Laufrädern (4), die an der Drehwelle (1) befestigt sind, ein Gehäuse (3), das mit einem Diffusor-Strömungsweg (23), der das Laufrad (4) von außen abdeckt und sich von einer Außenumfangsseite des Laufrads nach außen in einer radialen Richtung erstreckt, einem Rücklaufbiegungsabschnitt (24), der von einem äußeren radialen Endabschnitt des Diffusor-Strömungswegs (23) nach innen in einer radialen Richtung zurückkehrt, und einem Führungsströmungsweg (25) versehen ist, der sich von dem Rücklaufbiegungsabschnitt nach innen in radialer Richtung erstreckt, und eine Mehrzahl von Rücklaufschaufeln (50) enthält, die an bzw. auf dem Führungsströmungsweg (25) in Intervallen bzw. Abständen in einer Drehrichtung der Drehwelle (1) bereitgestellt sind, wobei das Verfahren umfasst:
einen Befestigungsschritt (S1) des Befestigens eines Rücklaufschaufelkörpers (50) auf dem Führungsströmungsweg (25), wobei der Rücklaufschaufelkörper (50) eine Überdruckfläche bzw. -oberfläche (54), die in der Drehrichtung nach vorne vertieft ist, eine Unterdruckfläche bzw. -oberfläche (53), die in der Drehrichtung nach vorne vorsteht, und ein virtuelles Schaufelblatt (V) enthält, das in der Drehrichtung nach vorne gekrümmt ist, während es in radialer Richtung nach innen verläuft und durch eine virtuelle Überdruckfläche bzw. - oberfläche (54), die durch die Überdruckfläche gebildet wird, die sich nach innen in radialer Richtung mit einer gleichmäßigen Krümmung erstreckt, und eine virtuelle Unterdruckfläche bzw. -oberfläche (53) gebildet wird, die durch die Unterdruckfläche gebildet wird, die sich nach innen in radialer Richtung mit einer gleichmäßigen Krümmung erstreckt, und wobei sich das virtuelle Schaufelblatt (V) bis zu einem Schnittpunkt zwischen einem inneren radialen Endabschnitt der virtuellen Überdruckfläche und einem inneren radialen Endabschnitt der virtuellen Unterdruckfläche erstreckt, und
einen Schneidschritt (S2), durchgeführt nach dem Befestigungsschritt (S1), des Schneidens eines Abschnitts, der einen inneren radialen Endabschnitt des virtuellen Schaufelblatts enthält, von der Überdruckfläche zu der Unterdruckfläche, um eine Schnittfläche bzw. -oberfläche (55) zu bilden,
wobei in dem Schneidschritt die Schnittfläche (55) so gebildet wird, dass ein Austrittswinkel (α) der Rücklaufschaufel größer ist als ein Austrittswinkel des virtuellen Schaufelblatts (V),
wobei der Austrittswinkel der Rücklaufschaufel (50) ein spitzer Winkel ist, der durch eine Mittellinie der Rücklaufschaufel (50) in Bezug auf eine Referenzlinie gebildet ist, die durch eine Hinterkante (52) der Schnittfläche (55) der Rücklaufschaufel (50) und die Achse (O) bei Betrachtung aus einer Richtung der Achse verläuft, wobei die Mittellinie einen gleichen Abstand von der Überdruckfläche (54) und der Unterdruckfläche (53) der Rücklaufschaufel (50) bei Betrachtung aus der Richtung der Achse (O) aufweist, und
wobei der Austrittswinkel des virtuellen Schaufelblatts (V) ein spitzer Winkel ist, der durch eine Mittellinie des virtuellen Schaufelblatts (V) in Bezug auf eine Referenzlinie gebildet ist, die durch den Schnittpunkt zwischen dem inneren radialen Endabschnitt der virtuellen Überdruckfläche und dem inneren radialen Endabschnitt der virtuellen Unterdruckfläche des virtuellen Schaufelblatts (V) und die Achse (O) bei Betrachtung aus der Richtung der Achse verläuft, wobei die Mittellinie den gleichen Abstand von der virtuellen Überdruckfläche und der virtuellen Unterdruckfläche des virtuellen Schaufelblatts (V) bei Betrachtung aus der Richtung der Achse (O) aufweist.

2. Verfahren zum Fertigen der Zentrifugaldrehmaschine nach Anspruch 1, wobei in dem Schneidschritt die Schnittfläche (55) bei Betrachtung aus einer axialen Richtung in einer linearen Form gebildet wird.

3. Verfahren zum Fertigen der Zentrifugaldrehmaschine nach Anspruch 1, wobei in dem Schneidschritt die Schnittfläche (55) in einer Bogenform gebildet wird, so dass sie bei Betrachtung aus einer axialen Richtung (O) in der Drehrichtung nach vorne vertieft ist.

4. Verfahren zum Fertigen der Zentrifugaldrehmaschine nach einem der Ansprüche 1 bis 3,
wobei in dem Schneidschritt die Schnittfläche (55) so gebildet wird, dass der Austrittswinkel (α) der Rücklaufschaufel 10° oder mehr beträgt.

5. Verfahren zum Fertigen der Zentrifugaldrehmaschine nach einem der Ansprüche 1 bis 4,
wobei in dem Schneidschritt die Schnittfläche (55) so gebildet wird, dass ein Trennabstand (L) zwischen einem Paar der in Drehrichtung benachbarten bzw. angrenzenden Rücklaufschaufeln (50) zwischen der Unterdruckfläche (53) einer Rücklaufschaufel und einem äußeren radialen Endabschnitt der Schnittfläche der anderen Rücklaufschaufel am kleinsten ist.

6. Verfahren zum Fertigen der Zentrifugaldrehmaschine nach einem der Ansprüche 1 bis 5, ferner umfassend:
einen Gekrümmte-Verbindungsfläche- bzw. -oberfläche(56)-Bildungsschritt des Bildens einer gekrümmten Verbindungsfläche bzw. -oberfläche (56), die die Überdruckfläche (54) und die Schnittfläche (55) nach dem Schneidschritt in einer gekrümmten Flächen- bzw. Oberflächenform verbindet.

7. Zentrifugaldrehmaschine, gefertigt nach dem Verfahren nach einem der Ansprüche 1 bis 6, umfassend:
eine Drehwelle (1), die um eine Achse drehbar ist,
eine Mehrzahl von Laufrädern (4), die an der Drehwelle (1) befestigt sind,
ein Gehäuse (3), das mit einem Diffusor-Strömungsweg (23), der das Laufrad (4) von außen abdeckt und sich von einer Außenumfangsseite des Laufrads nach außen in einer radialen Richtung erstreckt, einem Rücklaufbiegungsabschnitt (24), der von einem äußeren radialen Endabschnitt des Diffusor-Strömungswegs (23) nach innen in einer radialen Richtung zurückkehrt, und einem Führungsströmungsweg (25) versehen ist, der sich von dem Rücklaufbiegungsabschnitt nach innen in einer radialen Richtung erstreckt, und
eine Mehrzahl von Rücklaufschaufeln (50) enthält, die an bzw. auf dem Führungsströmungsweg (25) in Intervallen bzw. Abständen in der Drehrichtung der Drehwelle (1) bereitgestellt sind,
wobei die Rücklaufschaufel eine Überdruckfläche bzw. -oberfläche (54), die in der Drehrichtung nach vorne vertieft ist, eine Unterdruckfläche bzw. -oberfläche (53), die in der Drehrichtung nach vorne vorsteht, und eine Schnittfläche (55) enthält, die eine Endfläche mit einer Hinterkante (52) der Rücklaufschaufel ist,
wobei in Bezug auf einen Rücklaufschaufelkörper, der die Überdruckfläche, die Unterdruckfläche und ein virtuelles Schaufelblatt (V) enthält, das in der Drehrichtung vorwärts gekrümmt ist, während es in radialer Richtung nach innen verläuft und durch eine virtuelle Überdruckfläche bzw. -oberfläche (54), die durch die Überdruckfläche gebildet wird, die sich nach innen in radialer Richtung mit einer gleichmäßigen Krümmung erstreckt, und eine virtuelle Unterdruckfläche bzw. -oberfläche gebildet ist, die durch die Unterdruckfläche (53) gebildet ist, die sich nach innen in radialer Richtung mit einer gleichmäßigen Krümmung erstreckt, die Schnittfläche (55) der Rücklaufschaufel durch Schneiden eines Abschnitts, der einen inneren radialen Endabschnitt des virtuellen Schaufelblatts (V) des Rücklaufschaufelkörpers enthält, von der Überdruckfläche (54) zu der Unterdruckfläche gebildet wird,
wobei sich das virtuelle Schaufelblatt (V) bis zu einem Schnittpunkt zwischen einem inneren radialen Endabschnitt der virtuellen Überdruckfläche und einem inneren radialen Endabschnitt der virtuellen Unterdruckfläche erstreckt,
wobei ein Austrittswinkel (α) der Rücklaufschaufel größer ist als ein Austrittswinkel des virtuellen Schaufelblatts (V),
wobei der Austrittswinkel der Rücklaufschaufel (50) ein spitzer Winkel ist, der durch eine Mittellinie der Rücklaufschaufel (50) in Bezug auf eine Referenzlinie gebildet ist, die durch eine Hinterkante (52) der Schnittfläche (55) der Rücklaufschaufel (50) und die Achse (O) bei Betrachtung aus einer Richtung der Achse verläuft, wobei die Mittellinie einen gleichen Abstand von der Überdruckfläche (54) und der Unterdruckfläche (53) der Rücklaufschaufel (50) bei Betrachtung aus der Richtung der Achse (O) aufweist, und
wobei der Austrittswinkel des virtuellen Schaufelblatts (V) ein spitzer Winkel ist, der durch eine Mittellinie des virtuellen Schaufelblatts (V) in Bezug auf eine Referenzlinie gebildet ist, die durch den Schnittpunkt zwischen dem inneren radialen Endabschnitt der virtuellen Überdruckfläche und dem inneren radialen Endabschnitt der virtuellen Unterdruckfläche des virtuellen Schaufelblatts (V) und die Achse (O) bei Betrachtung aus der Richtung der Achse verläuft, wobei die Mittellinie den gleichen Abstand von der virtuellen Überdruckfläche und der virtuellen Unterdruckfläche des virtuellen Schaufelblatts (V) bei Betrachtung aus der Richtung der Achse (O) aufweist.

8. Zentrifugaldrehmaschine nach Anspruch 7, wobei die Schnittfläche (55) bei Betrachtung aus einer axialen Richtung in einer linearen Form gebildet ist.

9. Zentrifugaldrehmaschine nach Anspruch 7, wobei die Schnittfläche (55) in einer Bogenform gebildet ist, so dass sie bei Betrachtung aus einer axialen Richtung in der Drehrichtung nach vorne vertieft ist.

10. Zentrifugaldrehmaschine nach einem der Ansprüche 7 bis 9,
wobei die Schnittfläche (55) so gebildet ist, dass der Austrittswinkel (α) der Rücklaufschaufel 10° oder mehr beträgt.

11. Zentrifugaldrehmaschine nach einem der Ansprüche 7 bis 10,
wobei ein Trennabstand (L) zwischen einem Paar der in Drehrichtung benachbarten bzw. angrenzenden Rücklaufschaufeln (50) zwischen der Unterdruckfläche (53) einer Rücklaufschaufel und einem äußeren radialen Endabschnitt der Schnittfläche der anderen Rücklaufschaufel (50) am kleinsten ist.

12. Zentrifugaldrehmaschine nach einem der Ansprüche 7 bis 11, ferner umfassend eine gekrümmte Verbindungsfläche bzw. -oberfläche (56), die die Überdruckfläche (54) und die Schnittfläche (55) in einer gekrümmten Flächen- bzw. Oberflächenform verbindet.

## Revendications

1. Procédé de fabrication d'une machine rotative centrifuge, dans lequel la machine rotative centrifuge comprend un arbre de rotation (1) rotatif autour d'un axe (O), plusieurs roues (4) fixées à l'arbre de rotation (1), un boîtier (3) pourvu d'une voie d'écoulement de diffusion (23) couvrant la roue (4) de l'extérieur et s'étendant d'un côté périphérique extérieur de la roue vers l'extérieur dans une direction radiale, une partie de coude de retour (24) tournant à partir d'une partie d'extrémité radiale extérieure de la voie d'écoulement de diffusion (23) vers l'intérieur dans la direction radiale, et une voie d'écoulement de guidage (25) s'étendant à partir de la partie de coude de retour vers l'intérieur dans la direction radiale, et une pluralité d'aubes de retour (50) fournies sur la voie d'écoulement de guidage (25) à des intervalles dans une direction de rotation de l'arbre de rotation (1), le procédé comprenant :
une étape de fixation (S1) consistant à fixer un corps de palette de retour (50) sur la voie de guidage (25), dans laquelle le corps de palette de retour (50) comprend une surface de pression positive (54) en retrait vers l'avant dans le sens de rotation, une surface de pression négative (53) faisant saillie vers l'avant dans le sens de rotation et un profil aérodynamique virtuel (V) incurvé vers l'avant dans le sens de rotation en allant vers l'intérieur dans le sens radial et formé par une surface de pression positive virtuelle (54) formée par la surface de pression positive s'étendant vers l'intérieur dans le sens radial avec une courbure uniforme et une surface de pression négative virtuelle (53) formée par la surface de pression positive s'étendant vers l'intérieur dans le sens radial avec une courbure uniforme. une surface virtuelle de pression négative (53) formée par la surface de pression négative s'étendant vers l'intérieur dans la direction radiale avec une courbure uniforme et dans laquelle le profil aérodynamique virtuel (V) s'étend jusqu'à un point d'intersection entre une partie d'extrémité radiale intérieure de la surface virtuelle de pression positive et une partie d'extrémité radiale intérieure de la surface virtuelle de pression négative ; et
une étape de découpe (S2), effectuée après l'étape de fixation (S1), consistant à découper une partie comprenant une extrémité radiale intérieure du profilé aérien virtuel depuis la surface de pression positive jusqu'à la surface de pression négative, de manière à former une surface de découpe (55),
dans lequel, lors de l'étape de découpe, la surface de découpe (55) est formée de telle sorte qu'un angle de sortie (α) de l'aube de retour est plus grand qu'un angle de sortie du profil aérodynamique virtuel (V),
dans lequel l'angle de sortie de l'aube de retour (50) est un angle aigu formé par une ligne centrale de l'aube de retour (50) par rapport à une ligne de référence passant par un bord de fuite (52) de la surface de coupe (55) de l'aube de retour (50) et l'axe (O) lorsqu'elle est vue dans la direction de l'axe, la ligne centrale ayant la même distance de la surface de pression positive (54) et de la surface de pression négative (53) de l'aube de retour (50) lorsqu'elle est vue dans la direction de l'axe (O), et l'angle de sortie de la voilure virtuelle (V) est un angle aigu formé par une ligne centrale de la voilure virtuelle (V) par rapport à une ligne de référence passant par le point d'intersection entre la partie d'extrémité radiale intérieure de la surface de pression positive virtuelle et la partie d'extrémité radiale intérieure de la surface de pression négative virtuelle de la voilure virtuelle (V) et l'axe (O) lorsque l'on se place dans la direction de l'axe, la ligne médiane se trouve à la même distance de la surface virtuelle de pression positive et de la surface virtuelle de pression négative de la voilure virtuelle (V) lorsque l'on se place dans la direction de l'axe (O).

2. Procédé de fabrication de la machine rotative centrifuge selon la revendication 1,
dans lequel, lors de l'étape de coupe, la surface de coupe (55) est formée de manière linéaire lorsqu'elle est vue dans une direction axiale.

3. Procédé de fabrication de la machine rotative centrifuge selon la revendication 1,
dans lequel, lors de l'étape de coupe, la surface de coupe (55) est formée en forme d'arc de manière à être en retrait vers l'avant dans le sens de rotation, vu d'une direction axiale (O).

4. Procédé de fabrication de la machine rotative centrifuge selon l'une quelconque des revendications 1 à 3,
dans lequel, lors de l'étape de coupe, la surface de coupe (55) est formée de manière à ce que l'angle de sortie (α) de l'aube de retour soit de 10° ou plus.

5. Procédé de fabrication de la machine rotative centrifuge selon l'une quelconque des revendications 1 à 4,
dans lequel, lors de l'étape de découpe, la surface de découpe (55) EST formée de telle sorte qu'une distance de séparation (L) entre une paire d'aubes de retour (50) adjacentes l'une à l'autre dans le sens de rotation est la plus petite entre la surface de pression négative (53) d'une aube de retour et une partie d'extrémité radiale extérieure de la surface de découpe de l'autre aube de retour.

6. Procédé de fabrication de la machine rotative centrifuge selon l'une quelconque des revendications 1 à 5, comprenant en outre :
une étape de formation d'une surface courbe de connexion (56) consistant à former une surface courbe de connexion (56) reliant la surface à pression positive (54) et la surface coupée (55) sous la forme d'une surface courbe après l'étape de coupe.

7. Machine rotative centrifuge fabriquée selon le procédé de l'une des revendications 1 à 6, comprenant :
un arbre de rotation (1) qui peut tourner autour d'un axe ;
plusieurs roues (4) fixées à l'arbre de rotation (1) ;
un boîtier (3) pourvu d'une voie d'écoulement de diffusion (23) couvrant la roue (4) de l'extérieur et s'étendant d'un côté périphérique extérieur de la roue vers l'extérieur dans une direction radiale, une partie de coude de retour (24) tournant d'une partie d'extrémité radiale extérieure de la voie d'écoulement de diffusion (23) vers l'intérieur dans une direction radiale, et une voie d'écoulement de guidage (25) s'étendant de la partie de coude de retour (24) vers l'intérieur dans une direction radiale ; et
une pluralité d'aubes de retour (50) qui sont disposées sur la voie de guidage à intervalles dans le sens de rotation de l'arbre de rotation (1),
l'aube de retour comprend une surface de pression positive (54) en retrait vers l'avant dans le sens de rotation, une surface de pression négative (53) faisant saillie vers l'avant dans le sens de rotation, et une surface de coupe (55) qui est une surface d'extrémité comprenant un bord de fuite (52) de l'aube de retour,
dans lequel, en ce qui concerne un corps d'aube de retour comprenant la surface de pression positive, la surface de pression négative et un profil aérodynamique virtuel (V) qui est incurvé vers l'avant dans la direction de rotation comme il va vers l'intérieur dans la direction radiale et formé par une surface de pression positive virtuelle (54) formée par la surface de pression positive s'étendant vers l'intérieur dans la direction radiale à une courbure uniforme et une surface de pression négative virtuelle formée par la surface de pression négative (53) s'étendant vers l'intérieur dans la direction radiale à une courbure uniforme, la surface de coupe (55) de l'aube de retour est formée par la coupe d'une partie comprenant une extrémité radiale intérieure du profil aérodynamique virtuel (V) du corps de l'aube de retour depuis la surface de pression positive (54) jusqu'à la surface de pression négative, le profil aérodynamique virtuel (V) s'étendant jusqu'à un point d'intersection entre une extrémité radiale intérieure de la surface de pression positive virtuelle et une extrémité radiale intérieure de la surface de pression négative virtuelle,
dans lequel un angle de sortie (α) de l'aube de retour est plus grand qu'un angle de sortie de la voilure virtuelle (V),
dans lequel l'angle de sortie de l'aube de retour (50) est un angle aigu formé par une ligne centrale de l'aube de retour (50) par rapport à une ligne de référence passant par le bord de fuite (52) de la surface de coupe (55) de l'aube de retour (50) et l'axe (O) lorsque l'on se place dans la direction de l'axe, la ligne centrale étant à la même distance de la surface de pression positive (54) et de la surface de pression négative (53) de l'aube de retour (50) lorsque l'on se place dans la direction de l'axe (O), et
dans lequel l'angle de sortie de la voilure virtuelle (V) est un angle aigu formé par une ligne centrale de la voilure virtuelle (V) par rapport à une ligne de référence passant par le point d'intersection entre la partie d'extrémité radiale intérieure de la surface de pression positive virtuelle et la partie d'extrémité radiale intérieure de la surface de pression négative virtuelle de la voilure virtuelle (V) et l'axe (O) lorsque l'on se place dans la direction de l'axe, la ligne médiane se trouve à la même distance de la surface virtuelle de pression positive et de la surface virtuelle de pression négative de la voilure virtuelle (V) lorsque l'on se place dans la direction de l'axe (O).

8. Machine rotative centrifuge selon la revendication 7, dans laquelle la surface de coupe (55) a une forme linéaire lorsqu'elle est vue dans une direction axiale.

9. Machine rotative centrifuge selon la revendication 7, dans laquelle la surface de coupe (55) est formée en forme d'arc de manière à être en retrait vers l'avant dans la direction de rotation lorsqu'elle est vue d'une direction axiale.

10. Machine rotative centrifuge selon l'une des revendications 7 à 9,
dans lequel la surface de coupe (55) est formée de manière à ce que l'angle de sortie (α) de l'aube de retour soit de 10° ou plus.

11. Machine rotative centrifuge selon l'une des revendications 7 à 10, dans laquelle la distance de séparation (L) entre une paire d'aubes de retour (50) adjacentes l'une à l'autre dans le sens de rotation est la plus petite entre la surface de pression négative (53) d'une aube de retour et une partie d'extrémité radiale extérieure de la surface de coupe de l'autre aube de retour (50).

12. Machine rotative centrifuge selon l'une des revendications 7 à 11, comprenant en outre une surface de connexion incurvée (56) qui relie la surface de pression positive (54) et la surface de coupe (55) en une forme de surface incurvée.
